# EUROPEAN PATENT APPLICATION

(11) **EP 4 266 816 A1**
(43) Date of publication of application: **25.10.2023**
(21) Application number: 22742850.5
(22) Date of filing: 20.01.2022
(51) Int. Cl.: H04W 76/16, H04W 76/18, H04W 80/10

(54) **SESSION MANAGEMENT METHOD AND DEVICE IN MOBILE COMMUNICATION SYSTEM**

(30) Priority: 22.01.2021 KR 20210009761
(71) Applicant: Samsung Electronics Co., Ltd., Suwon-si, Gyeonggi-do 16677 (KR)
(72) Inventor: KIM, Dongyeon, Suwon-si, Gyeonggi-do 16677 (KR); MOON, Sangjun, Suwon-si, Gyeonggi-do 16677 (KR); LEE, Jicheol, Suwon-si, Gyeonggi-do 16677 (KR); JEONG, Sangsoo, Suwon-si, Gyeonggi-do 16677 (KR)
(74) Representative: HGF
(86) International application number: PCT/KR2022/001033
(87) International publication number: WO 2022/158874

(57) **Abstract**

The present disclosure relates to a 5G or 6G communication system for supporting a higher data transmission rate. A method according to an embodiment of the present invention is a method for managing a multi-access protocol data unit (MA-PDU) session of a user equipment (UE) by an access and mobility management function (AMF) device of a mobile communication system, and the method may comprise the steps of: receiving, from the UE, a PDU session establishment request message including access traffic steering, switching, and splitting (ATSSS) capability information supported by the UE; identifying whether the PDU session establishment request message is an MA-PDU request for a local area data network (LADN); and transmitting, to the UE on the basis of the identification, a rejection message for rejecting of the MA PDU request for the LADN.

## Description

### [Technical Field]

The disclosure relates to a device and method for providing a method of managing a session in a wireless communication system or a mobile communication system, and more particularly, to a method and device for providing access traffic steering, switching, and splitting (ATSSS) functions in order to support a local area data network (LADN) service in a wireless communication system.

### [Background Art]

5G mobile communication technology defines a wide frequency band to enable a fast transmission speed and new services, and may be implemented not only in a frequency ('sub 6 GHz') band of 6 GHz or less such as 3.5 GHz, but also in an ultra-high frequency band ('above 6 GHz') called a mmWave such as 28 GHz and 39 GHz. Further, in the case of 6G mobile communication technology, which is referred to as a beyond 5G system, in order to achieve a transmission speed that is 50 times faster than that of 5G mobile communication technology and ultra-low latency reduced to 1/10 compared to that of 5G mobile communication technology, implementations in terahertz bands (e.g., such as 95 GHz to 3 terahertz (3 THz) band) are being considered.

In the early days of 5G mobile communication technology, with the goal of satisfying the service support and performance requirements for an enhanced mobile broadband (eMBB), ultra-reliable low-latency communications (URLLC), and massive machine-type communications (mMTC), standardization has been carried out for beamforming and massive MIMO for mitigating a path loss of radio waves in an ultra-high frequency band and increasing a propagation distance of radio waves, and support for various numerologies (multiple subcarrier spacing operation, and the like) for efficient use of ultra-high frequency resources and dynamic operation for slot formats, initial access technology for supporting multi-beam transmission and broadband, a definition and operation of a band-width part (BWP), a new channel coding method such as low density parity check (LDPC) code for large capacity data transmission and polar code for high reliable transmission of control information, L2 pre-processing, and network slicing that provides a dedicated network specialized for specific services.

Currently, discussions are ongoing to improve initial 5G mobile communication technology and enhance a performance thereof in consideration of services that 5G mobile communication technology was intended to support, and physical layer standardization for technologies such as vehicle-to-everything (V2X) for helping driving determination of an autonomous vehicle and increasing user convenience based on a location and status information of the vehicle transmitted by the vehicle, new radio unlicensed (NR-U) for the purpose of a system operation that meets various regulatory requirements in unlicensed bands, NR UE power saving, a non-terrestrial network (NTN), which is direct UE-satellite communication for securing coverage in areas where communication with a terrestrial network is impossible, and positioning is in progress.

Further, standardization in the field of wireless interface architecture/protocol for technologies such as industrial Internet of things (IIoT) for supporting new services through linkage and convergence with other industries, integrated access and backhaul (IAB) that provides nodes for expanding network service areas by integrating wireless backhaul links and access links, mobility enhancement including conditional handover and dual active protocol stack (DAPS) handover, and 2-step RACH for NR that simplifies a random access procedure is also in progress, and standardization in the field of system architecture/service for 5G baseline architecture (e.g., service based architecture, service based interface) for applying network functions virtualization (NFV) and software-defined networking (SDN) technologies, mobile edge computing (MEC) that receives services based on a location of a terminal, and the like is also in progress.

When such a 5G mobile communication system is commercialized, connected devices in an explosive increase trend will be connected to communication networks; thus, it is expected that function and performance enhancement of a 5G mobile communication system and integrated operation of connected devices will be required. To this end, new research on eXtended reality (XR) for efficiently supporting augmented reality (AR), virtual reality (VR), mixed reality (MR), and the like, 5G performance improvement and complexity reduction using artificial intelligence (AI) and machine learning (ML), AI service support, metaverse service support, and drone communication will be conducted.

Further, the development of such a 5G mobile communication system will be the basis for the development of full duplex technology for improving frequency efficiency and system network of 6G mobile communication technology, satellite, Al-based communication technology that utilizes artificial intelligence (AI) from a design stage and that realizes system optimization by internalizing end-to-end AI support functions, and next generation distributed computing technology that realizes complex services beyond the limits of terminal computing capabilities by utilizing ultra-high-performance communication and computing resources as well as a new waveform for ensuring coverage in a terahertz band of 6G mobile communication technology, full dimensional MIMO (FD-MIMO), multi-antenna transmission technologies such as an array antenna and large scale antenna, metamaterial-based lenses and antennas for improving coverage of terahertz band signals, high-dimensional spatial multiplexing technology using orbital angular momentum (OAM), and reconfigurable intelligent surface (RIS) technology.

### [Disclosure]

### [Technical Problem]

In a 5G system, an LADN service was provided only through 3GPP access and could not be provided through non-3GPP access. Therefore, there is a problem that an ATSSS function, which is a function of reducing a transmission load by distributing data traffic between a data network (DN) and a UE by simultaneously using 3GPP access and non-3GPP access, may not be applied to an LADN data network name (DNN).

The disclosure provides a method and device capable of using a multi-access protocol data unit (MAPDU) session through one or more accesses using an ATSSS function in a process in which a terminal positioned inside an LADN service area in a mobile communication system establishes a protocol data unit (PDU) session with a 5G core network and transmits and receives data traffic.

### [Technical Solution]

According to an embodiment of the disclosure, in a mobile communication system, in the case that a UE requests MA (multi-access) PDU session establishment for an LADN DNN, an access and mobility management function (AMF) may determine whether MA PDU session establishment for the LADN DNN is possible in consideration of location information of the UE, a registration state (RM state) of the UE, and subscriber information.

Further, according to an embodiment of the disclosure, in a mobile communication system, in the case that an AMF determines that MA PDU session establishment for an LADN DNN is possible, a session management function (SMF) determines whether to accept an LADN MA PDU session establishment request in consideration of location information of the UE, a type of access in which the UE is registered, a connection management (CM) state of the UE, and subscriber information.

According to an embodiment of the disclosure, in a mobile communication system, in the case that an SMF determines to establish an LADN MA PDU session establishment request, the SMF notifies a PCF that an MA PDU session to be established is for an LADN DNN to enable the PCF to determine an ATSSS related session policy.

According to an embodiment of the disclosure, in a mobile communication system, in the case that an SMF determines to establish an LADN MA PDU session establishment request, the SMF determines an ATSSS related session policy according to a type and number of accesses registered by the UE, and assigns an N4 session for transmitting user plane traffic and a CN tunnel so that the UE notifies the registered access network and the UE of this.

According to an embodiment of the disclosure, in a mobile communication system, in the case that an SMF determines to accept an LADN MA PDU session establishment request, the SMF assigns an N4 session and CN tunnel for user plane traffic transmission according to the number of accesses registered by the UE.

According to an embodiment of the disclosure, in a mobile communication system, in the case that the UE leaves an LADN service area after an LADN MA PDU session is established, an SMF releases an LADN MA PDU session for all accesses to which the UE is connected or deactivates a user plane resource for all accesses to which the UE is connected.

According to an embodiment of the disclosure, in a mobile communication system, in the case that a UE is registered in a core network through 3GPP access and non-3GPP access or is registered in a core network through 3GPP access, the core network may re-establish an MA PDU session for an LADN DNN according to determination of the UE or the network, or the UE or the network may trigger a service request for re-activation of a user plane for the LADN DNN. In the case that the UE is registered in the core network through both 3GPP access and non-3GPP access, the UE or the network may trigger a service request for both 3GPP access and non-3GPP access.

According to an embodiment of the disclosure, in the mobile communication system, in the case that an AMF determines that MA PDU session establishment for an LADN DNN is not possible, the AMF may determine whether to establish a general PDU session (LADN PDU session) through 3GPP access for the corresponding LADN DNN. In the case that the AMF has sufficient information necessary for establishing the LADN PDU session, the AMF may continue a procedure for establishing the LADN PDU session. In the case that the AMF does not have conditions for establishing an LADN PDU session, the AMF may notify the UE that an LADN service cannot be provided through an MA PDU session, and the UE may request again to establish a general PDU session through 3GPP access for the corresponding LADN DNN.

### [Advantageous Effects]

According to a device and method according to various embodiments of the disclosure, by enabling data traffic transmission through non-3GPP access that was not supported in conventional LADN services by establishing MA PDU session for an LADN DNN based on location information of a terminal, registration status information for each access of the terminal, and subscriber information, services can be efficiently provided in a mobile communication system.

Effects obtainable in the disclosure are not limited to the above-described effects, and other effects not described may be clearly understood by those of ordinary skill in the art to which the disclosure belongs from the description below.

### [Description of Drawings]

FIG. 1 is a block diagram illustrating a 5G system structure related to an embodiment of the disclosure.
FIG. 2 is a block diagram illustrating a 5G system structure for supporting an ATSSS function related to an embodiment of the disclosure.
FIGS. 3A to 3C are diagrams illustrating a relationship between an area of interest and a registration area related to an embodiment of the disclosure.
FIG. 4 is a message flow diagram illustrating a method of reporting a location of a UE related to an embodiment of the disclosure.
FIG. 5A is a message flow diagram illustrating some steps of a method of establishing an LADN MA PDU session according to a UE request according to an embodiment of the disclosure.
FIG. 5B is a message flow diagram illustrating some steps of a method of establishing an LADN MA PDU session according to a UE request according to an embodiment of the disclosure.
FIG. 6 is a block diagram illustrating a terminal according to an embodiment of the disclosure.
FIG. 7 is a block diagram illustrating a network function (NF) device according to various embodiments of the disclosure.
FIG. 8 is a block diagram illustrating a base station device according to an embodiment of the disclosure.

### [Mode for Disclosure]

Hereinafter, preferred embodiments of the disclosure will be described in detail with reference to the accompanying drawings. In this case, it should be noted that in the accompanying drawings, the same components are denoted by the same reference numerals as much as possible. Further, it should be noted that the accompanying drawings are provided to help the understanding of the disclosure, and the disclosure is not limited to the form or disposition illustrated in the drawings of the disclosure. Further, detailed descriptions of well-known functions and constitutions that may obscure the gist of the disclosure will be omitted. In the following description, only parts necessary for understanding an operation according to various embodiments of the disclosure are described, and it should be noted that descriptions of other parts will be omitted so as not to obscure the gist of the disclosure. Further, although the disclosure describes various embodiments using terms used in some communication standards (e.g., 3rd generation partnership project (3GPP)), this is only an example for description. Various embodiments of the disclosure may be easily modified and applied to other communication systems.

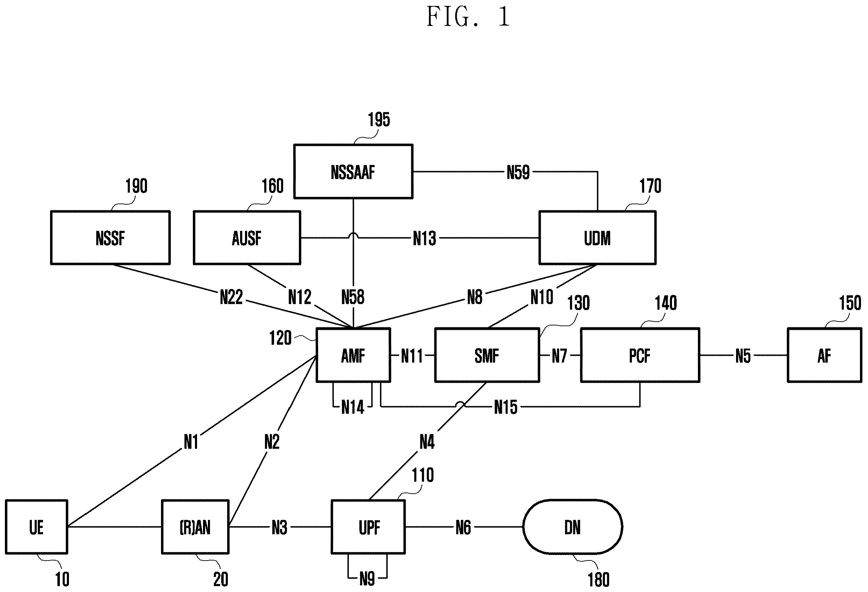

FIG. 1 is a block diagram illustrating a 5G system structure related to an embodiment of the disclosure.

With reference to FIG. 1, the 5G system architecture may include various components (i.e., network function (NF)). FIG. 1 illustrates an authentication server function (AUSF) device 160, an (core) access and mobility management function (AMF) device 120, a session management function (SMF) device 130, a policy control function (PCF) device 140, an application function (AF) device 150, a unified data management (UDM) device 170, a data network (DN) 180, a user plane function (UPF) device 110, a (radio) access network ((R)AN) 30, and a terminal, that is, a user equipment (UE) 10 corresponding to some thereof. Further, FIG. 1 illustrates a network slice selection function (NSSF) device 190 and a network slice specific authentication and authorization function (NSSAAF) device 195.

Each of the devices illustrated in FIG. 1 may be implemented into one server or device or may be implemented into a network slice instance, as described above. In the case of being implemented into a network slice instance, the device may be implemented into two or more identical or different network slice instances in one server or device or the device may be implemented into one network slice instance in two or more servers or devices.

Each of the above NFs may support the following functions.

The AUSF 160 may process and store data for authentication of the UE 10.

The AMF 120 may provide a function for access and mobility management in units of UEs, and each UE may be basically connected to one AMF. Specifically, the AMF 120 may support functions such as signaling between CN nodes for mobility between 3GPP access networks, termination of a radio access network (RAN) CP interface (i.e., N2 interface), termination N1 of non-access stratum (NAS) signaling, NAS signaling security (NAS ciphering and integrity protection), AS security control, registration management (registration area management), connection management, idle mode UE reachability (including control and execution of paging retransmission), mobility management control (subscription and policy), intra-system mobility and inter-system mobility support, network slicing support, SMF selection, lawful intercept (for AMF events and interfaces to the LI system), providing transport of session management (SM) messages between an UE and an SMF, transparent proxy for SM message routing, access authentication, access authorization including roaming authorization check, providing transport of SMS messages between the UE and a short message service function (SMSF), and security anchor function (SAF) and/or security context management (SCM). Some or all functions of the AMF 120 may be supported within a single AMF instance operating as one AMF.

The DN 180 may mean, for example, an operator service, Internet access, or a third party service. The DN 180 may transmit a downlink protocol data unit (PDU) to the UPF 110 or may receive a PDU transmitted from the UE 10 through the UPF 110.

The PCF 140 may provide a function of receiving packet flow information from an application server and determining policies such as mobility management and session management. Specifically, the PCF 140 may support functions such as support of a unified policy framework for controlling a network operation, providing policy rules so that control plane function(s) (e.g., AMF and SMF) may enforce policy rules, and front end implementation for accessing relevant subscription information for policy determination in a user data repository (UDR).

The SMF 130 may provide a session management function, and in the case that the UE 10 has multiple sessions, each session may be managed by a different SMF. Specifically, the SMF 130 may support functions such as session management (e.g., session establishment, modification, and release including maintaining a tunnel between the UPF and an AN node), UE IP address allocation and management (optionally including authentication), selection and control of an UP function, traffic steering configuration for routing traffic to a proper destination in the UPF, termination of an interface for policy control functions, enforcement of a control portion of policy and quality of service (QoS), lawful intercept (for SM events and interfaces to the LI system), termination of an SM portion of NAS messages, downlink data notification, initiator of AN specific SM information (transfer to the AN through N2 via AMF), SSC mode determination of a session, and a roaming function. As described above, some or all functions of the SMF 130 may be supported within a single SMF instance operating as one SMF.

The UDM 170 may store user subscription data, policy data, and the like. The UDM 170 may include two parts, that is, an application front end (FE) (not illustrated) and a user data repository (UDR) (not illustrated).

The FE may include an UDM FE (not illustrated) in charge of location management, subscription management, credential processing, and a PCF-FE (not illustrated) in charge of policy control. The UDR 170 may store data required for functions provided by the UDM-FE and a policy profile required by the PCF. Data stored in the UDR may include policy data and user subscription data including a subscription identifier, security credential, access and mobility related subscription data, and session related subscription data. The UDM-FE may support functions such as access to subscription information stored in the UDR and authentication credential processing, user identification handling, access authentication, registration/mobility management, subscription management, and SMS management.

The UPF 110 may transfer a downlink PDU received from the DN 180 to the UE 10 via the (R)AN 20 and transfer an uplink PDU received from the UE 10 via the (R)AN 20 to the DN 180. Specifically, the UPF 110 may support an anchor point for intra/inter RAT mobility, an external PDU session point for interconnection to a data network, packet routing and forwarding, user plane portion of packet inspection and policy rule enforcement, lawful intercept, traffic use amount reporting, uplink classifier for supporting routing of traffic flow to a data network, branching point for supporting a multi-homed PDU session, QoS handling (e.g., packet filtering, gating, uplink/downlink rate enforcement) for a user plane, uplink traffic verification (service data flow (SDF) mapping between SDF and QoS flow), transport level packet marking in uplink and downlink, and downlink packet buffering and downlink data notification triggering functions. Some or all functions of the UPF 110 may be supported within a single UFP instance operating as one UPF.

The AF 150 may interact with the 3GPP core network in order to provide services (e.g., support functions such as application effect on traffic routing, access to network capability exposure, and interaction with policy framework for policy control).

The (R)AN 20 may collectively refer to a new radio access network supporting both evolved E-UTRA, which is an evolved version of 4G radio access technology, and new radio access technology (NR) (e.g., gNB).

The (R)AN 20, for example, the gNB may support functions for radio resource management (i.e., radio bearer control, radio admission control, connection mobility control, dynamic allocation of resources (i.e., scheduling) to the UE in uplink/downlink, Internet protocol (IP) header compression, encryption and integrity protection of user data stream, selection of the AMF 120 upon attachment of the UE 10 in the case that routing to the AMF 120 is not determined from information provided to the UE 10, user plane data routing to the UPF 110(s), control plane information routing to the AMF 120, connection setup and release, scheduling and transmission (generated from the AMF) of paging messages, scheduling and transmission of system broadcast information (generated from the AMF or operating and maintenance, O&M), measurement and measurement report configuration for mobility and scheduling, transport level packet marking in uplink, session management, support of network slicing, QoS flow management and mapping to data radio bearer, support of an UE in an inactive mode, NAS message distribution function, NAS node selection function, radio access network sharing, dual connectivity, and tight interworking between NR and E-UTRA.

The UE 10 may mean a user equipment. The user device may be referred to as a terminal, a mobile equipment (ME), or a mobile station (MS). Further, the user device may be a portable device such as a laptop computer, a mobile phone, a personal digital assistant (PDA), a smart phone, and a multimedia device or may be a non-portable device such as a personal computer (PC) and a vehicle-mounted device. Hereinafter, the user device will be described by referring to a user equipment (UE) or a terminal.

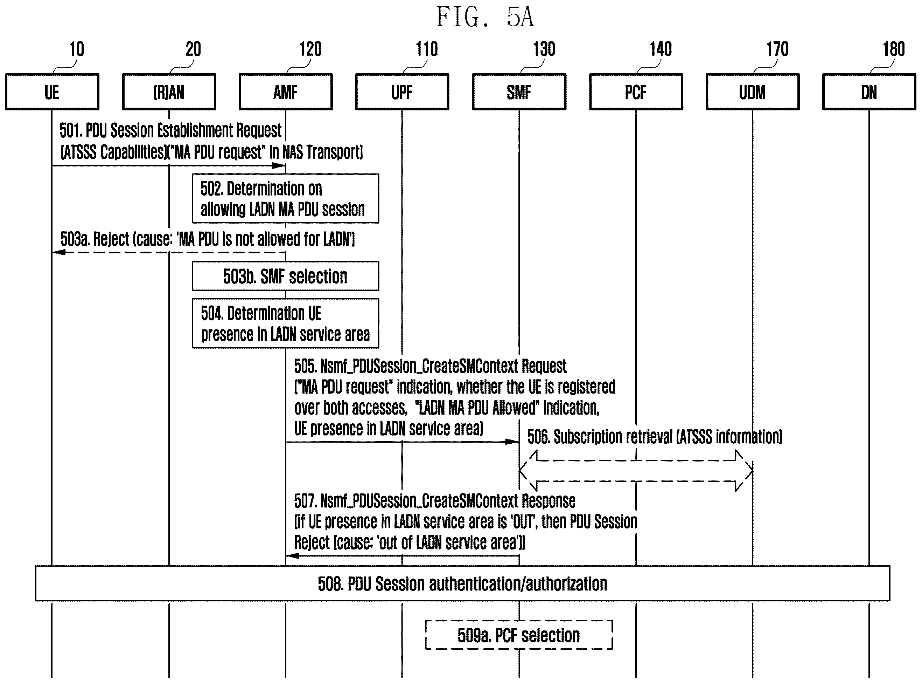

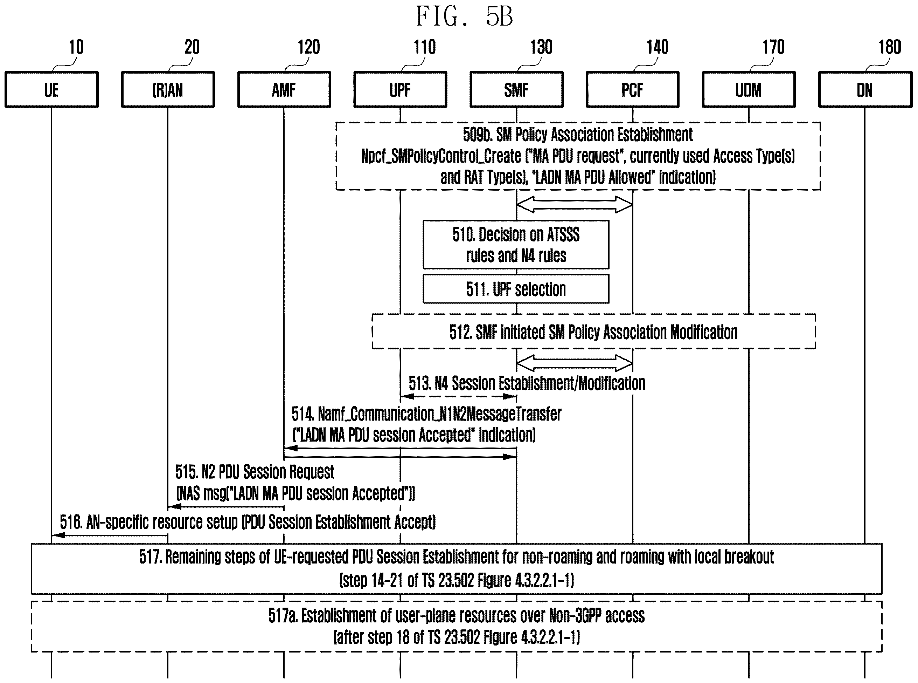

In FIG. 1, for clarity of description, a network exposure function (NEF) device and an NF repository function (NRF) device are not illustrated, but all NFs illustrated in FIG. 5 to be described later may perform an interaction with the NEF and the NRF, as needed.

The NRF will be described. The NRF (not illustrated in FIG. 1) may support a service discovery function. In the case that a 2NF discovery request is received from a 1NF instance, after performing a 2NF discovery operation, the NRF may provide found 2NF instance information to the 1NF instance. Further, the NRF may maintain available NF instances and services supported by the NF instances.

For convenience of description, FIG. 1 illustrates a reference model for the case that a UE accesses one DN using one PDU session, but the disclosure is not limited thereto.

The UE 10 may simultaneously access two (i.e., local and central) data networks using multiple PDU sessions. In this case, two SMFs may be selected for different PDU sessions. However, each SMF may have the capability to control both the local UPF and the central UPF within the PDU session.

Further, the UE 10 may simultaneously access two (i.e., local and central) data networks provided within a single PDU session.

In the 3GPP system, a conceptual link connecting NFs in the 5G system is defined as a reference point. The following description illustrates reference points included in the 5G system architecture represented in FIG. 1.
- N1: Reference point between the UE and the AMF
- N2: Reference point between the (R)AN and the AMF
- N3: Reference point between the (R)AN and the UPF
- N4: Reference point between the SMF and the UPF
- N5: Reference point between the PCF and the AF
- N6: Reference point between the UPF and a data network
- N7: Reference point between the SMF and the PCF
- N8: Reference point between the UDM and the AMF
- N9: Reference point between two core UPFs
- N10: Reference point between the UDM and the SMF
- N11: Reference point between the AMF and the SMF
- N12: Reference point between the AMF and the AUSF
- N13: Reference point between the UDM and the authentication server function (AUSF)
- N14: Reference point between two AMFs
- N15: Reference point between the PCF and the AMF in the case of non-roaming scenario, reference point between the PCF and the AMF in a visited network in the case of roaming scenario

In the following description, the terminal may mean the UE 10, and the terms of the UE or the terminal may be used interchangeably. In this case, the terminal should be understood as the UE 10 unless the terminal is additionally defined.

The terminal may access a data network (e.g., a network providing an Internet service) through the 5G system to establish a session, and distinguish each data network using an identifier of a data network name (DNN). The DNN may be used for determining an NF related to a user plane, an interface between NFs, and an operator policy when the terminal connects a network system and a session. The DNN may be used, for example, for selecting an SMF and an UPF(s) for a PDU session and be used for selecting an interface (e.g., N6 interface)(s) between a data network and a UPF for a PDU session. Further, the DNN may be used for determining a policy of a mobile communication operator for applying to a PDU session.

A separate DNN supporting an LADN service may be defined in the 5G system, and the UE, RAN, and/or core network may determine whether a DNN is a DNN (hereinafter, LADN DNN) for the LADN service.

According to the standards of the 5G system so far, the LADN service is available only in the case that the terminal accesses the core network with 3GPP access through an NG-RAN. This is possible because the NG-RAN may accurately track a location of the terminal when the 5G core network determines whether the terminal is within the LADN service area, and in the case of accessing the core network with non-3GPP access (e.g., WiFi), the terminal may not be connected to the LADN DNN. A unit of tracking a location of a registered terminal in the 5G system is a tracking area (TA), and the AMF 120 may assign, to the UE, a registration area (RA), which is an area in which the AMF 120 may manage access and mobility in the terminal registration procedure, and the RA may have one or more TAs. In this case, each TA may be identified by a tracking area identity (TAI). 3GPP access is identified by assigning an intrinsic TAI to each TA constituting the RA, but non-3GPP access assigns only one TAI; thus, for the terminal accessing through a non-3GPP access network, a method of tracking a location of the terminal in units of TA is not supported.

The ATSSS function is a function of transferring data traffic through one or more accesses by utilizing both the above-described 3GPP access and/or non-3GPP access between the terminal and the 5G core network. As a representative example, in the case that the 5G core network determines that user-plane resources between the terminal and the DN 160 are not sufficient or that a load has occurred in a resource management capacity of the network, it corresponds to the case that data is distributed and transmitted by activating both 5G access and Wi-Fi access, rather than transmitting data traffic only through one of 5G access or Wi-Fi.

Because the UE 10 is registered in a core network through 3GPP access or is registered in the core network through 3GPP access and non-3GPP access, in the case that the AMF 120 may determine whether the UE 10 exists within an LADN service area, the disclosure proposes methods of enabling to transmit data traffic transmitted and received between the UE 10 and the LADN through non-3GPP access as well as 3GPP access. As examples of the methods proposed in the disclosure, the following seven methods (a) to (g) are proposed. However, in the case that each of the following methods may be operated together, two or more methods may be used together. Further, in the case that some of techniques of one specific method may be borrowed from another method, such substitution is possible. Therefore, it is not limited to the following 7 methods, and various methods using the following methods may be used.
(a) For an MA PDU session establishment request for an LADN DNN of the UE 10, a method in which the AMF 120 determines whether to allow MA PDU session establishment for the LADN DNN or general PDU session establishment
(b) According to subscription information contracted with an operator by the UE 10, a method in which the AMF 120 and/or the SMF 130 determine(s) whether MA PDU session establishment is possible for an LADN DNN to which the UE 10 intends to access and request(s) MA PDU session establishment or general PDU session establishment to the network
(c) For an MA PDU session establishment request for the LADN DNN of the UE 10, a method in which the AMF 120 determines whether to establish a session by converting MA PDU session establishment into general PDU session establishment or notifying the UE 10 of rejection and whether to initiate a general PDU session establishment request according to determination of the UE 10
(d) In the case that the UE 10 notifies that the session may be established by converting general PDU session establishment to MA PDU session establishment according to the determination of the network while the UE 10 requests general PDU session establishment for the LADN DNN, a method in which the network (e.g., the AMF 120 or the SMF 130) determines whether to establish an MA PDU session or a general PDU session for the corresponding LADN DNN
(e) A method in which the network (e.g., the AMF 120 and/or the SMF 130) determines an ATSSS related session management policy in establishing an MA PDU session for an LADN DNN
(f) After the MA PDU session for the LADN DNN is established, in the case that the UE 10 is out of the LADN service area, a method in which the network (e.g., the AMF 120, the SMF 130, the UPF 110) releases the MA PDU session or inactivates a user plane resource
(g) In the case that the UE 10 is registered in the core network through a 3GPP access network and/or a non-3GPP access network, but that it is not possible to determine whether the UE 10 is within the LADN service area, a method of managing a session in the network (e.g., the AMF 120 and the SMF 130)

A detailed description of the methods (a) to (g) will be described later.

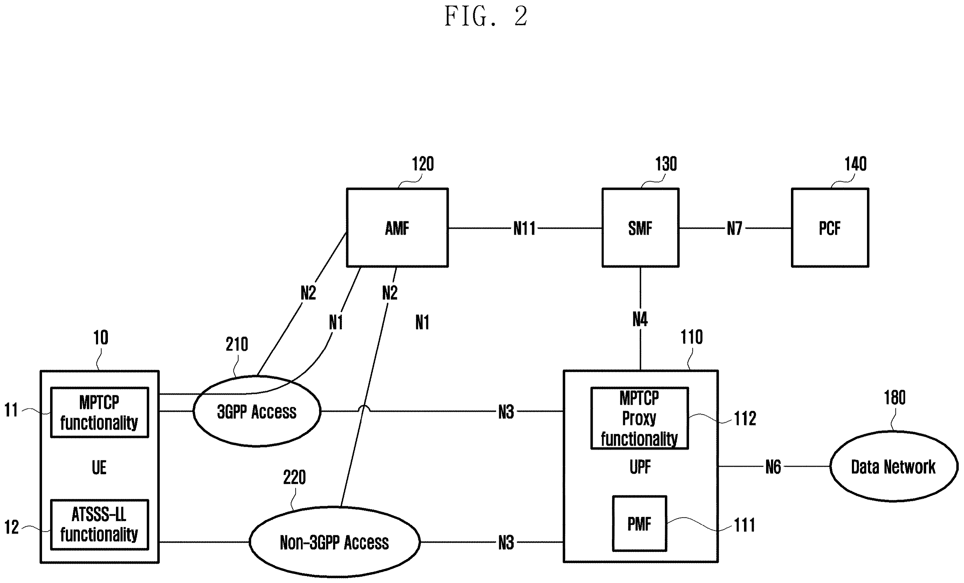

FIG. 2 is a block diagram illustrating a structure for supporting an access traffic steering, switching, splitting (ATSSS) function in a 3GPP 5G system.

With reference to FIG. 2, the UE 10 may access a mobile communication network, for example, a 3GPP access 210 and a non-mobile communication network, for example, a non-3GPP access 220. The ATSSS function is composed of steering functionality and steering mode. The steering functionality determines a transport protocol between a UPF of a transmitting device and a UPF of a receiving device. The steering functionality is determined by which transport layer determines traffic steering, switching, and splitting, and in the case of using a multi path TCP (MPTCP) (IETF RFC 8684) protocol located at a higher layer than the IP layer, it corresponds to 'MPTCP functionality', and in the case that it is determined in a lower layer than the IP layer, it corresponds to 'ATSSS-Lower Layer (ATSSS-LL) functionality'. A UE and network supporting MPTCP functionality may communicate with an MPTCP proxy separately constituted in UPF. The MPTCP functionality may control only TCP traffic supporting only an MPTCP protocol. In the case of supporting ATSSS-LL functionality, the UPF does not include a separate proxy component and may control all types of TCP traffic. The steering mode defines a method of steering, switching, and splitting data traffic.

Further, the UPF 110, the SMF 130, and the PCF 140 according to the disclosure may perform a separate control operation for access of the UE 10. Such a control operation will be further described with reference to drawings to be described later.

As illustrated in the drawing, the UPF 110 according to the disclosure may include an MPTCP proxy functionality 112 for allowing access from the 3GPP access point 210 therein, and include a performance measurement function (PMF) 111 in order to allow access from the non-3GPP access point 220. The PMF 111 is a function of measuring a network environment between the UE 10 and the UPF 110, and may measure whether a round trip time (RTT) required for uplink and downlink and whether 3GPP access and non-3GPP access are currently activated. A steering functionality and steering mode that may be supported by the core network may be determined based on information provided by the PMF 111, which has an overall effect on parameter determination for N3 and N4 connections.

When the ATSSS function described in FIG. 2 is utilized, as illustrated in FIG. 1, traffic transmission is possible through multi-path between a PDU (protocol data unit or packet data unit) session anchor user plane function (UPF) 110 and user equipment (UE) 10. In order to use the ATSSS, the UE 10, the AMF 120, the SMF 130, and the UPF 110 should support the ATSSS.

FIGS. 5A and 5B are message flow diagrams illustrating an example of a session management procedure of a network in the case that a UE supporting the ATSSS function requests establishment of an MA PDU session to an LADN DNN.

FIGS. 5A and 5B may be continuous signal flow diagrams and are divided into two diagrams for convenience. Accordingly, after the flow of FIG. 5A, the flow of FIG. 5B and/or continuously with the flow of FIG. 5A may be performed.

With reference to FIG. 5A, in step 501, the UE 10 may transmit a PDU session establishment request message to the AMF 120. According to a method (a) described above as one of methods of enabling to transmit data traffic transmitted and received between the UE 10 and the LADN through the non-3GPP access 220 as well as the 3GPP access 210, when the UE 10 supporting the ATSSS function intends to request an MA PDU session rather than a general PDU session, ATSSS capabilities information supported by the UE 10 may be included in the PDU session establishment request message. The UE 10 may include an "MA PDU request" indicator in the NAS transport message that transmits the PDU session establishment request message to the AMF 120 to indicate that ATSSS capabilities information is included.

In step 502, the AMF 120 may identify whether the DNN that requests MA PDU session establishment requested by the UE 10 is an LADN DNN and whether the corresponding DNN is included in a subscribed DNN list of subscriber information. If it is identified that the requested DNN is an LADN DNN and is included in the subscribed DNN list, the AMF 120 may determine whether to establish an MA PDU session (hereinafter, an LADN MA PDU session) for the corresponding LADN DNN in consideration of an access type (3GPP access or non-3GPP access) (i.e., used for transmitting a PDU session establishment request message) currently used by the UE 10, an access type (3GPP access and/or non-3GPP access) in which the UE 10 is registered, subscriber information, network state, and the like. An example of a method of determining whether to establish an MA PDU session is as follows.
(1) The AMF 120 may allow the establishment of an LADN MA PDU session only in the case that the UE 10 is registered in only 3GPP access or registered in both the 3GPP access 210 and the non-3GPP access 220. In this case, only in the case that the AMF 120 may accurately determine whether the UE 10 exists within the LADN service area, it may correspond to the case of allowing establishment of the MA PDU session.
(2) The AMF 120 may allow only general PDU session establishment through 3GPP access for the LADN DNN regardless of the access type in which the UE 10 is registered. In this case, even if the AMF 120 may accurately determine whether the UE 10 exists within the LADN service area, it may correspond to the case of allowing only establishment of a single access PDU session rather than an MA PDU session.

In step 503, the AMF 120 may continue an LADN MA PDU session establishment procedure (step 503b) according to the determination (1) or (2) made in step 502 and the access type in which the UE 10 is registered or may stop the procedure and notify the UE 10 of a rejection (step 503a). In the case that the determination (2) is made in step 502, the AMF 120 should perform step 503a. In step 503a, the AMF 120 may generate a message for rejecting the LADN MA PDU session establishment request and include an 'MA PDU session is not allowed for the LADN DNN' in a reason for rejection in the generated message. The UE 10 that has received the reason for such a rejection may request again a general PDU session for the corresponding LADN DNN. In the case that the determination (1) is made in step 502, the AMF 120 may select an SMF capable of managing the LADN and MA PDU session in step 503b.

Hereinafter, an operation of configuring an MA PDU session registered only in 3GPP access or registered in both the 3GPP access 210 and the non-3GPP access 220 will be described.

In step 504, the AMF 120 may identify whether the UE 10 exists within the LADN service area. The AMF 120 may configure a value of a 'UE presence in LADN service area' parameter to "IN" in the case that the UE 10 exists within the LADN service area and configure a value of a 'UE presence in LADN service area' parameter to "OUT" in the case that the UE 10 does not exist within the LADN service area. The AMF 120 may include a configured value of the 'UE presence in LADN service area' parameter in an Nsmf_PDUSession_CreateSMContext request message in step 505 and transmit a generated Nsmf_PDUSession_CreateSMContext request message to the SMF 130. In the case that the AMF 120 makes the determination (1) in step 502 described above, the AMF 120 may include an "LADN MA PDU Allowed" indicator in the message.

In step 506, the SMF 130 may acquire subscription data from the UDM 170 and identify an ATSSS function supportable by the core network. The SMF 130 may determine whether to accept the LADN MA PDU session establishment request based on the information received in step 505 and the information obtained from the UDM 170. In the case that the SMF 130 receives the "LADN MA PDU allowed" indicator in step 505, the SMF 130 should not reject the MA PDU session because the DNN requested by the UE 10 is an LADN DNN. However, when there is a higher priority policy configured by the operator, the policy may be followed.

In the case that the value of UE presence in LADN service area is "OUT", the SMF 130 may reject the LADN MA PDU session establishment request for "out of LADN service area" in step 507. When the UE presence in LADN service area value is "IN", the "LADN MA PDU allowed" indicator is received, and the UE 10 is registered in 3GPP access, the SMF 130 may determine to accept the LADN MA PDU session establishment and continue step 507 and subsequent steps. However, when the UE 10 is not registered in 3GPP access, the SMF 130 may determine to reject the LADN MA PDU session establishment and reject a request for the LADN MA PDU session establishment for "out of LADN service area" in step 507.

In step 508, an optional secondary authentication/authorization procedure may be performed between the UE 10 and the DN 180.

In the case that a dynamic policy and charging control (PCC) rule is applied, the SMF 130 may select an appropriate PCF in step 509a.

Hereinafter, with reference to FIG. 5B, in step 509b, the SMF 130 may perform an SM policy association establishment procedure with the PCF 140 selected in step 509a. The SM policy association establishment procedure is started when the SMF 130 transmits an Npcf_SMPolicyControl_Create message to the PCF 140, and in the case that the SMF receives the "LADN MA PDU allowed" indicator in step 505, the indicator may be included in the message. The PCF 140 may determine the PCC rule considering that up-link and down-link resources may use the 3GPP access 210 and/or the non-3GPP access 220 between the LADN DNN and the UE 10.

Step 509b may actually correspond to an SM policy association establishment procedure performed between the SMF 130 and the PCF 140, and include an operation of transmitting and receiving messages as in a bidirectional arrow between the SMF 130 and the PCF 140 below. It should be noted that in the disclosure, in order to simplify the description of all these operations, a message required according to the disclosure and some of parameters included in the message are exemplified in step 509b.

In step 510, the SMF 130 may determine an N4 rule to be transferred to the UPF 110 and an ATSSS rule to be transferred to the UE 10. In the case that the SMF 130 receives the "LADN MA PDU allowed" indicator in step 505, the SMF 130 may determine the ATSSS rule and the N4 rule considering that up-link and down-link resources between the corresponding LADN DNN and the UE 10 may use the 3GPP access 210 and/or the non-3GPP access 220.

In step 511, the SMF 130 may select the UPF 110 capable of managing the LADN MA PDU session. As described with reference to FIG. 2, the UPF 110 may be a UPF that may be connected to the 3GPP access 210 and/or the non-3GPP access 220.

In step 512, in the case that there is a change in UE presence in LADN service area, LADN MA PDU allowed indication, and/or access type and number registered by the UE 10, the SMF 130 may modify SM policy association through an SM policy association modification procedure. The downward bidirectional arrow in step 512 may include an operation of transmitting and receiving messages between the SMF 130 and the PCF 140, as described above in step 509b, and in this case, it should be noted that a message required according to the disclosure and some parameters included in the message are exemplified in step 512.

In step 513, an N4 session may be established between the SMF 130 and the UPF 110. In the case that the SMF 130 receives the "LADN MA PDU allowed" indicator in step 505, the SMF 130 and the UPF 110 should assign two CN core network tunnels (IP address/port of the core network side of the N3 interface, and other tunnel address).

In step 514, the SMF 130 may transmit a Namf_Communication_N1N2Message transfer message to the AMF 120. The Namf_Communication_N1N2Message transfer message may include an "LADN MA PDU session accepted" indicator. The "LADN MA PDU session accepted" indicator may be included in the PDU session establishment accept message and transferred to the UE 10 through steps 515 and 516.

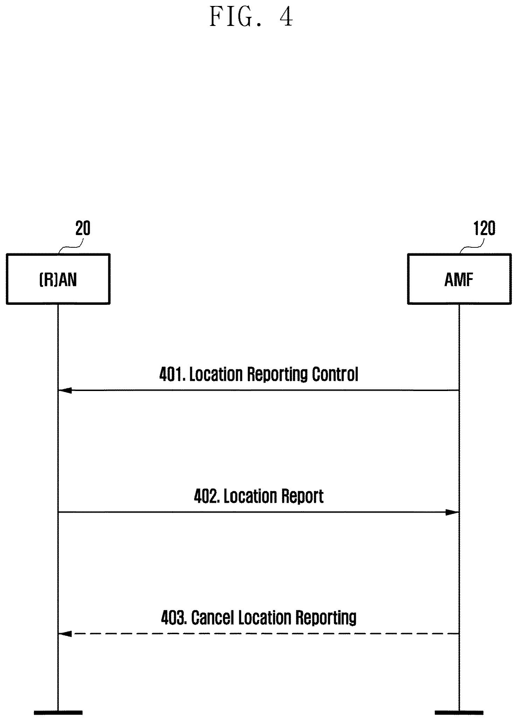

From step 517, a general MA PDU session establishment procedure after the procedure up to step 516 described above may be followed. For example, in step 505, in the case that the SMF 130 is notified that the UE 10 is registered in both the 3GPP access 210 and the non-3GPP access 220, the SMF 130 may allocate a user plane resource for the non-3GPP access 210 and establish a user plane path. In the process, the process should not be stopped for the reason of the requested DNN is an LADN DNN and the non-3GPP access 220. However, when there is a higher priority policy configured by the operator, the policy may be followed. In case of session establishment for the LADN DNN, the SMF 130 may request an Namf_EventExposure_Subscribe service to the AMF 120, and when a change occurs in UE presence in LADN service area, the SMF 130 may receive an immediately report on occurrence of a change from the AMF 120. An operation corresponding to this will be briefly described with reference to FIG. 4.

FIG. 4 is a signal flow diagram in the case that the AMF controls to report a location of a terminal to a base station of a 3GPP network in a network to which the disclosure is applied.

With reference to FIG. 4, the AMF 120 may transmit a location reporting control message to the base station 20 of the 3GPP network in step 401. In this case, the case that the AMF 120 transmits to the base station 20 of the 3GPP network may be the above case. That is, the SMF 130 may request an Namf_EventExposure_Subscribe service to the AMF 120 to request a report when a change occurs in UE presence in LADN service area. Therefore, the AMF 120 may transmit a location reporting control message to the base station 20 of the 3GPP network based on this, as in step 401. The location reporting control message may be a message requesting an immediate report in the case that a location change of a specific UE occurs (or is recognized).

Accordingly, in the case that a location of a specific UE is changed and that a location report of the corresponding UE occurs from the AMF 120, and in the case that it is instructed to report the location, the base station 20 may generate a location report message to transmit the location report message to the AMF 120 in step 402.

In the case that a location report of the UE is no longer required based on the expiration of the session of the UE or other specific reasons, the AMF 120 may generate a cancel location reporting message to transmit the cancel location reporting message to the base station 20 in step 403. Accordingly, when the base station 20 receives a cancel location reporting message, the base station 20 may not report immediately even if a location change occurs in the corresponding UE.

With reference back to FIG. 5B, because the MA PDU session establishment request as in step 517 may occur regardless of the access type, in the case that the UE 10 is currently registered in both the 3GPP access 210 and the non-3GPP access 220 and that the LADN MA PDU session establishment request first occurs through the non-3GPP access 220, even if the access to which the UE 10 currently accesses is the non-3GPP access 220, the SMF 130 may request an Namf_EventExposure_Subscribe service. In this case, the AMF 120 may receive a report on a change in location information of the UE using the same (using a 3GPP network) or similar (using a non-3GPP network, but similar to the procedure of FIG. 4 described above) procedure as that of FIG. 4 described above the case of the mobile communication system as an example. In the case of the LADN service, a unit for reporting a change in UE location information may be designated as area of interest, which may correspond to the LADN service area.

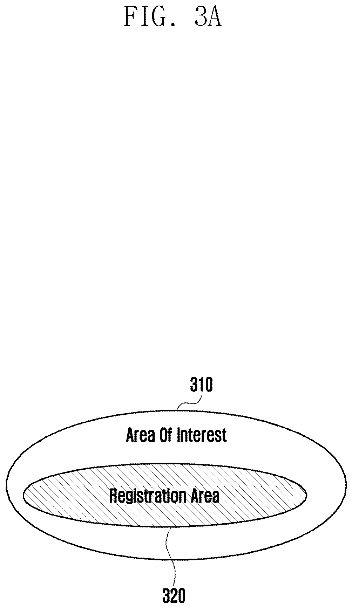

FIGS. 3A to 3C are diagrams illustrating an example of a relationship between an area of interest and a registration area in a 5G system in order to help understanding of the disclosure.

With reference to FIG. 3A, as one of the relationships between an area of interest (AOI) 310 and a registration area (RA) 320, the case that the RA 320 is included within a range of the AOI 310 is illustrated. In FIG. 3A, the RA 320 is illustrated to be identified with the AOI 310 in a hatched format.

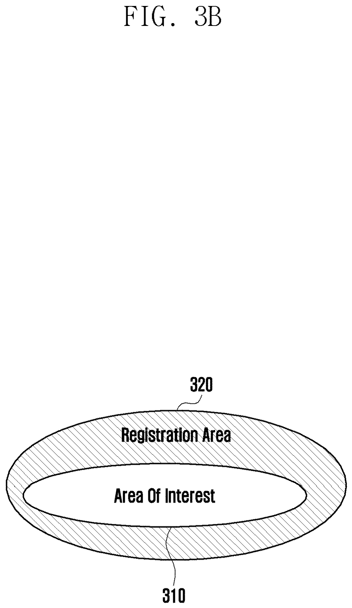

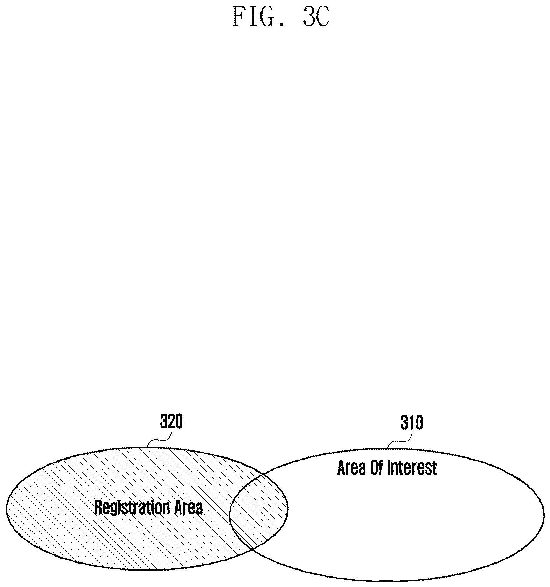

Further, contrary to FIG. 3A, FIG. 3B illustrates the case that the AOI 310 is included within the range of the RA 320. According to the relationship between FIGS. 3A and 3B, although not illustrated in the drawings, there may occur the case that the RA 320 and the AOI 310 coincide. Further, in FIG. 3C, there may occur the case that only a part of the AOI 310 and a part of the RA 320 are common as an intersection.

When the UE 10 in a CM-CONNECTED state is within the AOI 310 or when the RA 320 is included within the AOI 310 and the UE 10 is within the RA 320, the AMF 120 may identify (determine) UE presence of AOI to "IN". When the UE 10 in the CM-CONNTED state is outside the AOI 310 or exists somewhere within the RA 320 that does not include the AOI 310, the AMF 120 may identify (determine) UE presence of AOI to "OUT". In the case that none of the aforementioned IN and OUT conditions are met, the AMF 120 may identify (determine) to an "UNKNOWN" state. A representative example of capable of being the UNKNOWN state may correspond to the case that the UE 10 is in a CM-IDLE state and in an RM-REGISTERED state, the AOI 310 is included in the RA 320, and that the network recognizes only that the UE 10 is in the RA 320, and may not determine whether the UE 10 is inside the AOI 310 or outside the AOI 320 within the RA 320.

As described above, in the case that the location of the UE 10 is in an UNKNOWN state, the conventional LADN service triggers a service request by the UE 10 to activate a PDU session and a user plane resource so that the network may re-determine the accurate location of the UE 10. In this case, the network may determine a value of UE presence of AOI to IN or OUT. In FIGS. 5A and 5B, in the case that the SMF 130 received an "LADN MA PDU allowed" indicator from the AMF 120 and that the UE becomes an UNKNOWN state after LADN MA PDU session establishment, in order to activate user-plane connection for the 3GPP access 210 and the non-3GPP access 220, the SMF 130 may trigger a service request. Further, in FIGS. 5A and 5B, in the case that the UE received an "LADN MA PDU accepted" indicator or receives an "MA PDU accepted" indicator for the MA PDU session for the LADN DNN, in order to activate the UP connection for the 3GPP access 210 and the non-3GPP access 220, the UE may trigger a service request.

As in a method f, which is one of examples described as methods of enabling to transmit data traffic transmitted and received between the UE 10 and the LADN through the non-3GPP access 220 as well as the 3GPP access 210, after the LADN MA PDU session is established, in the case that the UE 10 is out of an LADN service area, the UE 10 should trigger one of LADN MA PDU session release or user plane resource deactivation. In the case that the UE 10 is registered in both the 3GPP access 210 and the non-3GPP access 220 and that a session is established through both accesses, as in the release/deactivation procedure for a conventional general MA PDU session, an operation of releasing/deactivating only one of the two accesses is not allowed and both accesses should be released/deactivated.

As in a method d, which is one of methods of enabling to transmit data traffic transmitted and received between the UE 10 and the LADN through the non-3GPP access 220 as well as the 3GPP access 210, the UE 10 supporting ATSSS may notify (MA PDU network-upgrade allowed indication) that it may be changed to MA PDU session establishment according to network determination to establish the session while the UE 10 requests MA PDU session establishment or requests general PDU session establishment. In the case that the UE 10 notifies the MA PDU session conversion permission while the UE 10 requests the network to establish a general PDU session for the LADN DNN, and in the case that the AMF 120 makes the determination (2) in step 502 of FIG. 5A described above, the AMF 120 should not transmit the "MA PDU network-upgrade allowed" indicator to the SMF 130.

When the AMF 120 determines one of (1) or (2) in step 502 of FIG. 5A, the AMF 120 may consider a method c, which is one of methods of enabling to transmit data traffic transmitted and received between the UE 10 and the LADN through the non-3GPP access 220 as well as the 3GPP access 210. In the case that the AMF 120 determines to convert the LADN MA PDU session request into a PDU session and to establish the PDU session, in step 503, the AMF 120 may proceed a general PDU session establishment procedure without notifying the UE 10 of rejection. In this case, the UE 10 may recognize that the LADN PDU session is established according to the determination of the network based on not finding the ATSSS rule in a PDU session accepted message. Alternatively, the AMF 120 may notify the UE 10 of rejection and enable the UE 10 to request a PDU session for the corresponding LADN DNN.

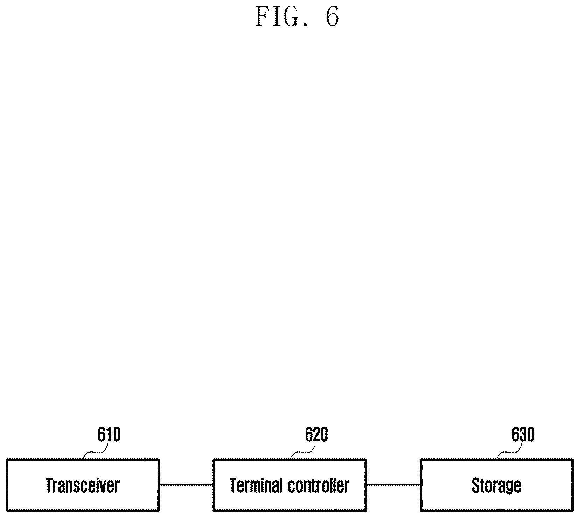

FIG. 6 is a block diagram illustrating a terminal according to an embodiment of the disclosure.

With reference to FIG. 6, the terminal may include a communication unit 610, a terminal controller 620 and a storage 630.

The communication unit 610 may include a wireless processer for converting a wireless signal of a mobile communication system and at least one communication processor for processing according to communication rules. Further, the communication unit 610 may include a wireless processer capable of communicating with at least one other wireless communication network, for example, WiFi, Wibro, and/or zigbee other than the mobile communication network. The wireless processor may include an antenna and include an amplifier for amplifying a received signal, a filter, and a down converter circuit. Further, the wireless processor may include an A/D converter for converting an analog signal into a digital signal. Further, the wireless processer may include a D/A converter for converting a digital signal to be transmitted into an analog signal, an up-converter for converting to a transmission band, a filter, and a power amplifier.

The terminal controller 620 may include at least one application processor, and perform various types of controls necessary for controlling the UE based on a user's request.

The storage 630 may include an area for storing various parameters required for communication and an area for storing user data. Further, the transceiver 610, the terminal controller 620, and the storage 630 may be connected using a bus or through another type of data input/output path.

In addition to the constitution illustrated in FIG. 6, the terminal may further include an input unit and an output unit for an input/output interface between a user and a UE. The input unit may use at least one or two or more of a user's voice recognition, touch recognition, fingerprint recognition, biometric recognition, or key input recognition. The output unit may provide a visually recognizable method to the user using various forms (e.g., display, hologram, and beam project) capable of generating sound, vibration, and visual effects.

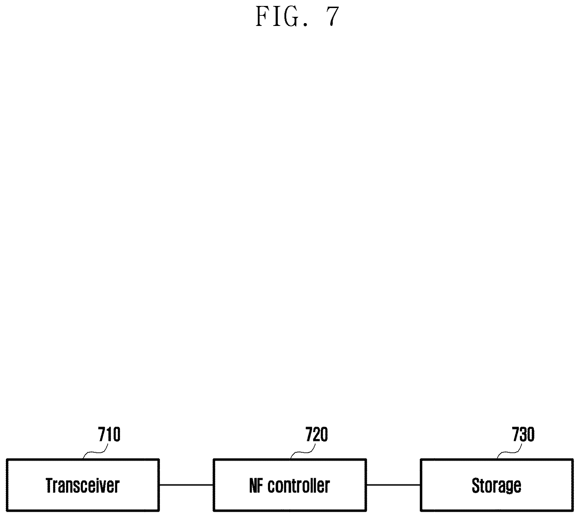

FIG. 7 is a block diagram illustrating a network function (NF) device according to various embodiments of the disclosure.

With reference to FIG. 7, the NF device may include a transceiver 710, an NF controller 720, and a storage 730. The transceiver 710 may provide an interface for communicating with other NFs. For example, in the case that the NF is the AMF 120, the NF may provide an interface for communicating with the SMF 130. As another example, in the case that the NF is the UPF 110, the NF may provide an interface for transmitting and receiving various data/signals/messages to and from the RAN 20, the AMP 120, and/or the DN 180.

The NF controller 720 may control the operation of a corresponding NF. For example, in the case that the NF is the AMF 120, the NF may perform the control for the operation of the AMF 120 among the operations according to FIG. 5A described above. As another example, in the case that the NF is the SMF 130, the NF may perform the control for the operation of the SMF 130 among the operations according to FIG. 5A described above.

The storage 730 may store information for controlling the NF, information generated during the control, and necessary information according to the disclosure.

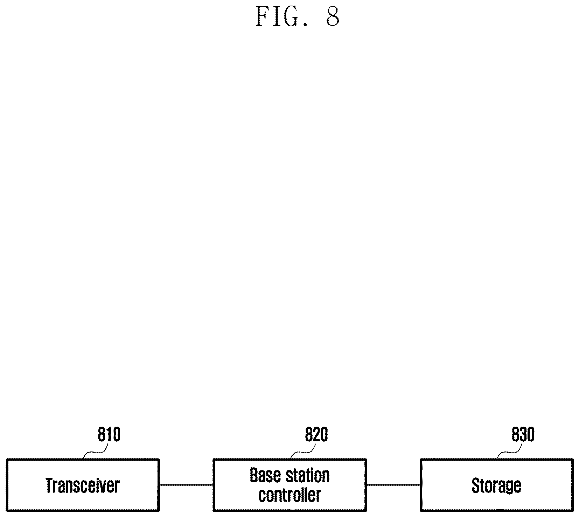

FIG. 8 is a block diagram illustrating a base station device according to an embodiment of the disclosure.

With reference to FIG. 8, the base station device may include a transceiver 810, a base station controller 820, and a storage 830. The transceiver 810 may be largely divided into a network side interface and a wireless interface. The network side interface may provide an interface for transmitting and receiving data/signals/messages to and from the AMF 120 and the UPF 110, as described with reference to FIGS. 1 and 2. Further, the wireless interface may include a constitution for providing a wireless interface according to the 3GPP standard with a UE.

The base station controller 820 may perform the control for performing the above-described operation according to the disclosure. Further, it is obvious that the base station controller 820 controls the overall operation of the base station.

The storage 830 may store data necessary for controlling the base station and data generated during the control, and in particular, as described above, in the case that a control message for reporting the location of the UE is received, the storage 830 may store the control message and include a list for reporting the control message.

Embodiments disclosed in this specification and drawings described above only present specific examples to easily describe the contents of the disclosure and to help understanding of the disclosure, and they are not intended to limit the scope of the disclosure. Therefore, in addition to the embodiments disclosed herein, all changes or modifications derived based on the technical idea of the disclosure should be interpreted as being included in the scope of the disclosure.

### [Industrial Applicability]

The disclosure may be used in the case of controlling a service in a network in the case that a UE accesses an LADN to receive a service.

## Claims

1. A method of managing a multi-access protocol data unit (MA-PDU) session of a user equipment (UE) in an access and mobility management function (AMF) device of a mobile communication system, the method comprising:
receiving, from the UE, a PDU session establishment request message comprising access traffic steering, switching, splitting (ATSSS) capabilities information supported by the UE;
identifying whether the PDU session establishment request message is an MA-PDU request for a local area data network (LADN); and
transmitting, to the UE, a rejection message rejecting the MA PDU request for the LADN based on the identification.

2. The method of claim 1, wherein the PDU session establishment request message comprises a non-access stratum (NAS) transport message.

3. The method of claim 2, wherein the NAS transport message comprises an MA PDU request.

4. The method of claim 1, further comprising:
receiving a single PDU request for the LADN after transmitting the rejection message to the UE; and
performing a procedure for configuring a single PDU to the UE for the LADN.

5. The method of claim 1, wherein the PDU session establishment request message further comprises MA PDU network-upgrade allowed indication information.

6. A method of managing a multi-access protocol data unit (MA-PDU) session of a user equipment (UE) in an access and mobility management function (AMF) device of a mobile communication system, the method comprising:
receiving, from the UE, a PDU session establishment request message comprising MA PDU network-upgrade allowed indication information;
identifying whether the PDU session establishment request message is a request for a local area data network (LADN); and
transmitting, to the UE, a rejection message rejecting the MA PDU request for the LADN based on the identification.

7. The method of claim 6, further comprising enabling to not transmit the MA PDU network-upgrade allowed indication information to a session management function (SMF) device configured to manage a session of the UE.

8. The method of claim 6, wherein the PDU session establishment request message comprises a non-access stratum (NAS) transport message.

9. The method of claim 6, wherein the NAS transport message comprises an MA PDU request.

10. The method of claim 6, further comprising:
receiving a single PDU request for the LADN after transmitting the rejection message to the UE; and
performing a procedure for configuring a single PDU with the UE for the LADN.

11. An access and mobility management function (AMF) device, comprising:
a transceiver configured to communicate with other NFs of a mobile communication network;
a memory configured to store information of a user equipment (UE); and
at least one processor is configured to control to:
receive, from the UE, a PDU session establishment request message comprising access traffic steering, switching, and splitting (ATSSS) capabilities information supported by the UE through the transceiver,
identify whether the PDU session establishment request message is an MA-PDU request for a local area data network (LADN), and
transmit, to the UE, a rejection message rejecting the MA PDU request for the LADN through the transceiver based on the identification.

12. The AMF device of claim 11, wherein the PDU session establishment request message comprises a non-access stratum (NAS) transport message.

13. The AMF device of claim 12, wherein the NAS transport message comprises an MA PDU request.

14. The AMF device of claim 11, wherein the at least one processor is configured to further control to:
receive a single PDU request for the LADN through the transceiver after transmitting the rejection message to the UE, and
perform a procedure for configuring a single PDU with the UE for the LADN.

15. The AMF device of claim 11, wherein the PDU session establishment request message further comprises MA PDU network-upgrade allowed indication information.

16. An access and mobility management function (AMF) device, comprising:
a transceiver configured to communicate with other NFs of a mobile communication network;
a memory configured to store information of a user equipment (UE); and
at least one processor is configured to control to:
receive, from the UE, a PDU session establishment request message comprising MA PDU network-upgrade allowed indication information through the transceiver,
identify whether the PDU session establishment request message is a request for a local area data network (LADN), and
transmit, to the UE, a rejection message rejecting the MA PDU request for the LADN through the transceiver based on the identification.

17. The AMF device of claim 16, wherein the at least one processor is configured to control not to transmit the MA PDU network-upgrade allowed indication information to a session management function (SMF) device configured to manage a session of the UE.

18. The AMF device of claim 16, wherein the PDU session establishment request message comprises a non-access stratum (NAS) transport message.

19. The AMF device of claim 16, wherein the NAS transport message comprises an MA PDU request.

20. The AMF device of claim 16, wherein the at least one processor is configured to further control to:
receive a single PDU request for the LADN through the transceiver after transmitting the rejection message to the UE, and
perform a procedure for configuring a single PDU with the UE for the LADN.
